(19) Europäisches Patentamt
European Patent Office
Office européen des brevets

(11) EP 1 763 656 B1

(12) EUROPÄISCHE PATENTSCHRIFT

(45) Veröffentlichungstag und Bekanntmachung des Hinweises auf die Patenterteilung:
25.09.2013 Patentblatt 2013/39

(51) Int Cl.:
G01G 19/50 (2006.01)   A61B 5/103 (2006.01)

(21) Anmeldenummer: 05733545.7

(22) Anmeldetag: 15.03.2005

(86) Internationale Anmeldenummer:
PCT/DE2005/000467

(87) Internationale Veröffentlichungsnummer:
WO 2006/005279 (19.01.2006 Gazette 2006/03)

(54) **KRAFTAUSWERTEVORRICHTUNG UND KRAFTAUSWERTEVERFAHREN ZUR BESTIMMUNG VON GLEICHGEWICHTSKENNGRÖSSEN**

FORCE EVALUATING DEVICE AND FORCE EVALUATING METHOD FOR DETERMINING BALANCE CHARACTERISTICS

DISPOSITIF ET PROCEDE D'EVALUATION DE FORCE POUR DETERMINER DES CARACTERISTIQUES D'EQUILIBRE

(84) Benannte Vertragsstaaten:
AT BE BG CH CY CZ DE DK EE ES FI FR GB GR HU IE IS IT LI LT LU MC NL PL PT RO SE SI SK TR
Benannte Erstreckungsstaaten:
AL BA HR LV MK YU

(30) Priorität: 03.07.2004 DE 102004032398

(43) Veröffentlichungstag der Anmeldung:
21.03.2007 Patentblatt 2007/12

(73) Patentinhaber: Julius-Maximilians-Universität Würzburg
97970 Würzburg (DE)

(72) Erfinder: SCHNEIDER, Peter
97080 Würzburg (DE)

(74) Vertreter: Pfenning, Meinig & Partner GbR
Patent- und Rechtsanwälte
Theresienhöhe 13
80339 München (DE)

(56) Entgegenhaltungen:
WO-A-01/52734        DE-A1- 10 151 361
FR-A- 2 690 613      US-A- 4 195 643
US-A- 5 620 003      US-A1- 2001 056 249

• HASAN S S ET AL: "DRUGS AND POSTURAL SWAY", IEEE ENGINEERING IN MEDICINE AND BIOLOGY MAGAZINE, IEEE SERVICE CENTER, PISACATAWAY, NJ, US LNKD- DOI: 10.1109/51.256956, vol. 11, no. 4, 1 December 1992 (1992-12-01), pages 35-41, XP000334873, ISSN: 0739-5175
• OLIVEIRA L F ET AL: "Calculation of area of stabilometric signals using principal component analysis", PHYSIOLOGICAL MEASUREMENT, INSTITUTE OF PHYSICS PUBLISHING, BRISTOL, GB LNKD- DOI:10.1088/0967-3334/17/4/008, vol. 17, no. 4, 1 November 1996 (1996-11-01), pages 305-312, XP020073758, ISSN: 0967-3334
• BARATTO L, MORASSO PG, RE C, SPADA G.: "A new look at posturographic analysis in the clinical context: sway-density versus other parameterization techniques.", MOTOR CONTROL., vol. 6, 2002, pages 246-270,
• SUTHERLAND D H: "The evolution of clinical gait analysis part III - kinetics and energy assessment", GAIT & POSTURE, ELSEVIER LNKD- DOI:10.1016/J.GAITPOST.2004.07.008, vol. 21, no. 4, 1 June 2005 (2005-06-01), pages 447-461, XP004887349, ISSN: 0966-6362
• BURDETT RG, SKRINAR GS, SIMON SR.: "Comparison of mechanical work and metabolic energy consumption during normal gait.", J ORTHOP RES., vol. 1, no. 1, 1983, pages 63-72, New York

EP 1 763 656 B1

**Beschreibung**

Die vorliegende Erfindung bezieht sich auf eine Vorrichtung und ein Verfahren zur Bestimmung von Gleichgewichtskenngrößen. Die erfindungsgemäße Vorrichtung dient insbesondere zur quantitativen Erfassung von Funktionen und von Störungen des motorischen und sensorischen Gleichgewichtssystems beim Menschen.

US 5,620,003 A beschreibt eine Plattform, die zur Ermittlung von Herzparametern einer auf der Plattform stehenden Person eingesetzt werden kann. Die Signal-übertragung geschieht mittels mehrerer Signalumsetzer, deren Signale addiert werden können. Bei den Signalumsetzern kann es sich um Piezosensoren handeln. Zur Auswertung können die Signale mittels eines A/D-Wandlers gewandelt und über eine FFT ausgewertet werden.

Die FR 2 690 613 A beschreibt eine Kraftauswertevorrichtung, die mehrere unabhängige Platten aufweist. Pro Einzelplatte kann mehr als ein Kraftsensor vorge-sehen sein. Es kann eine Furier-Transformation oder eine sogenannte Chaosanalyse erfolgen.

Die US 4,195,643 A beschreibt eine Kraftauswertevorrichtung, die zur Auswertung von Muskelbewegungen von Patienten eingesetzt werden kann. Systeme mit einer oder mit mehreren Standplatten, der/denen mehrere Kraftsensoren zugeordnet sind, können verwendet werden. Die Signale der einzelnen Sensoren können addiert werden und mittels Fourier-Transformationen ausgewertet werden.

Schließlich zeigt US 2001/056249 A eine Kraftauswertevorrichtung mit Kraftsensoren zwischen Boden- und Deckplatten. Die Plattform wird insbesondere zur Ermittlung von Balanceproblemen eingesetzt. Eine FFT kann zur Auswertung eingesetzt werden.

Das Gleichgewicht eines Menschen im Stand wird durch das harmonische zusammenspiel der Motorik und Sensorik des menschlichen Bewegungsapparates und von speziellen Funktionen des Zentralnervensystems, dem spinalmotorischen und dem supraspinalmotorischen System gewährleistet. Das Gleichgewicht im Stand wird gegenwärtig durch verschiedene Tests geprüft, die lediglich ein subjektives Beurteilen durch den Beobachter erlauben, ggf. unter Zuhilfenahme einer Stoppuhr. Störungen im spinalmotorischen und im supraspinalmotorischen System sind einerseits bedingt durch Krankheiten oder Verletzungen, andererseits unterliegen sie Prozessen der Alterung. Alle Komponenten, die einen sicheren Stand oder zielsichere willkürliche und unwillkürliche Bewegungen gewährleisten, können davon betroffen sein. Im Endresultat führt hauptsächlich die Feinregulation der Muskelgruppen der unteren Extremitäten, insbesondere der Fußbeuger und Fußstrecker zur Aufrechterhaltung des Gleichgewichts im Stehen.

Die Diagnose einer Osteopenie und einer Osteoporose wird heute anhand von Knochendichtemessungen durchgeführt und berücksichtigt weder die Ursachen noch die Pathogenese oder die Knochenfestigkeit. So wird die Entstehung von osteoporosebezogenen Frakturen bei Frauen nach der Menopause hauptsächlich auf verminderte Knochenfestigkeit zurückgeführt. Zur Bestimmung des Risikos, einen Knochenbruch zu erleiden, wird daher als Präventivmaßnahme die Knochendichte bestimmt. Tatsächlich hängt jedoch die Wahrscheinlichkeit eines Knochenbruchs zu mehr als 80 % von anderen Faktoren ab. Hierzu sind u.a. folgende Faktoren zu zählen: Minderung der Kraft bzw. der Muskelleistung der unteren Extremitäten, Balancestörungen, Gehstörungen, Medikamenteneinnahme, Alkohol und andere Drogen, kognitive Minderung in Bezug auf das Umfeld und Visusminderung. Diese Faktoren stellen zum Teil gesundheitliche Beeinträchtigungen dar. Sie werden gegenwärtig lediglich in qualitativer Form (Anamnese) bestimmt.

Es wird auch allgemein nicht berücksichtigt, dass bedingt durch unsere Zivilisationsgesellschaft eine Minderbeanspruchung des Muskel-Knochen-Systems zu einem physiologischen Adaptationsprozess führt, der mit zur Knochenbruchwahrscheinlichkeit beiträgt. Zahlrei-che Studien belegen, dass gegenwärtige körperliche Aktivität mit einer deutlichen Reduktion des Knochenbruchrisikos bei Männern und Frauen einhergeht. Entscheidend ist hierbei auch die Höhe der körperlichen Aktivität (siehe beispielsweise Karlsson, J. in: Musculoskelet. Neuron. Inter., 4/2004, Seiten 12 bis 21).

Das Risiko eines Sturzes einer Person ist eng verknüpft mit der sensomotorischen Regelung des Körperschwerpunktes. Zahlreiche endogene und exogene Faktoren haben auf die Leistungsfähigkeit der Sensomotorik Einfluss. Das spinale und das supraspinale motorische System können an verschiedenen Stellen von krankhaften Prozessen oder Veränderungen durch das Altern beeinflusst werden. Sie können somit Leistungsdefizite aufweisen, die mit einem erhöhten Sturzrisiko einhergehen. Darin kommt zum Ausdruck, in welchem Maße und mit welcher Geschwindigkeit Muskelleistungen aktiviert werden können, um eine Auslenkung des Schwerpunktes in Richtung eines instabilen Zustandes zu korrigieren und einen Sturz zu vermeiden.

Die epidemiologischen Daten erlauben Rückschlüsse von der Häufigkeit von Knochenbrüchen auf die zugrundeliegenden mechanischen Eigenschaften der Knochen und anderer Faktoren, die damit assoziierbar sind. Mittels der Knochendichte als Surrogatparameter bzw. Ersatzparameter für die Knochenfestigkeit lässt sich eine Beziehung zur Wahrscheinlichkeit von Knochenbrüchen ableiten. In statistischen Modellrechnungen auf Basis großer epidemiologischer Studien zeigt sich, dass die Knochendichte die Wahrscheinlichkeit einer Fraktur nur zu etwa 15 % erklären kann. Wenn ein Knochenbruch nicht in erster Linie das Resultat einer unabwendbaren und unvorhergesehenen Krafteinwirkung ist, dann kann mittels des Schutzmechanismusses der Sturzabwendung oder des Mechanismusses einer geeigneten Ausweichreaktion einer Störung von außen entgegengewirkt werden. Ein Maß für die Fähigkeit dazu sollte sich grundsätzlich aus einem einfachen System der Gleichgewichtsanalyse ableiten lassen.

Es existiert jedoch keine Vorrichtung, mit dem die Sturzwahrscheinlichkeit und damit das Knochenbruchrisiko in Bezug auf die oben genannten Faktoren (Minderung der Kraftleistung bzw. Muskelleistung der unteren Extremitäten, Balancestörungen, Gehstörungen, Medikamenteneinfluss, Einfluss von Alkohol und/oder anderer Drogen, kognitive Minderung in Bezug auf das Umfeld und/oder Visusminderung) festgestellt werden kann.

Aufgabe der vorliegenden Erfindung ist es somit, eine Vorrichtung und ein Verfahren zur Verfügung zu stellen, mit welcher bzw. mit welchem die von einer Person zum Halten des Gleichgewichts ausgeübten Kräfte und/oder ausgeführten Bewegungen quantitativ erfassbar sind. Aufgabe ist es darüberhinaus, eine Vorrichtung und ein Verfahren zur Verfügung zu stellen, mit der bzw. mit dem aus den quantitativ erfassten Kräften physikalische Kenngrößen ableitbar sind, die das Bewegungs- und/oder Kraftverhalten der Person kennzeichnen.

Die Lösung der erfindungsgemäßen Aufgabe basiert auf der quantitativen Erfassung der Regelfähigkeit des motorischen und sensorischen Systems. Hierzu wird auf den bekannten Tandem-Stand-Test zurückgegriffen. Beim Tandem-Stand-Test (nachfolgend auch als Tandem-Test oder Tandem-Stand bezeichnet) wird die Fähigkeit getestet, bei voreinander angeordneten Füßen (Ferse des einen Fußes unmittelbar vor der Fußspitze des anderen Fußes angeordnet bzw. Anordnung beider Füße auf einer Geraden) den Stand über etwa 10 s halten zu können, ohne einen Ausfallschritt zu machen.

Eine erfindungsgemäße Kraftauswertung ist in den unabhängigen Ansprüchen beschrieben. Nachfolgend wird die Kraftauswertung anhand eines Beispiels beschrieben, das neben den Merkmalen der Erfindung auch noch weitere Merkmale zeigt.

Die erfindungsgemäße Kraftauswertevorrichtung weist genau drei in einer Ebene (Kraftaufnehmerebene) angeordnete Kraftaufnehmer bzw. Kraftsensoren auf. Mit diesen Kraftaufnehmern ist eine starre, begehbare Trägerplatte gekoppelt. Wird auf diese Trägerplatte auf der den Kraftaufnehmern abgewandten Seite während eines Zeitintervalls (Messintervall) eine Druckkraft (beispielsweise Gewichtskraft einer Person) ausgeübt, so nehmen die voneinander entkoppelten Kraftaufnehmer jeweils über die Trägerplatte auf die Kraftaufnehmer übertragene, aufgrund der Druckkraft resultierende Kräfte zeitaufgelöst auf. Mit den Kraftaufnehmern ist signalausgangsseitig eine Auswerteeinheit verbunden. Diese weist eine Leistungsspektrum-Berechnungseinheit auf, mit der das Leistungsspektrum eines aus der Summe der Ausgangssignale der genau drei Kraftaufnehmer gebildeten Gesamtsignals berechenbar ist.

Zusätzlich kann die erfindungsgemäße Kraftauswertevorrichtung eine Differenziereinheit aufweisen, mit der die zeitliche Ableitung des gerade beschriebenen Gesamtsignals berechenbar ist und mit der aus der berechneten zeitlichen Ableitung weitere Kenngrößen ableitbar sind. Es werden genau drei Kraftaufnehmer verwendet, welche in der Kraftaufnehmerebene in Form eines Dreiecks angeordnet sind. Besonders bevorzugt handelt es sich hierbei um eine Anordnung in Form eines gleichseitigen Dreiecks.

In einer weiteren vorteilhaften Ausgestaltungsform weist die Kraftauswertevorrichtung auf der der Trägerplatte abgewandten Seite angrenzend an die Kraftaufnehmer eine Bodenplatte auf. Die Einheit aus Trägerplatte und Bodenplatte, zwischen denen dann die Kraftaufnehmer angeordnet sind, ist somit stabil und robust und einfach auf einer ebenen Bodenfläche aufstellbar.

In einer weiteren vorteilhaften Ausgestaltungsvariante weist die Auswerteeinheit mit den Kraftaufnehmern signalausgangsseitig verbundene Operationsverstärker auf, mit denen das Ausgangssignal der Kraftaufnehmer verstärkbar ist. Signalausgangsseitig nach den Operationsverstärkern weist die Auswerteeinheit dann einen Analog-Digital-Konverter auf, mit dem die verstärkten analogen Signale am Ausgang der Operationsverstärker in ein digitales Signal umsetzbar sind. Die beschriebene Ausgestaltungsvariante weist dann einen Computer auf, insbesondere einen Personal-Computer PC, dem die digitalen Signale zur Auswertung übermittelbar sind. Die Leistungsspektrum-Berechnungseinheit und die Differenziereinheit der Auswerteeinheit können bei der beschriebenen Variante Bestandteile des Computers sein.

Die genaue Ausgestaltungsform der erfindungsgemäßen Kraftauswertevorrichtung und des erfindungsgemäßen Kraftauswerteverfahrens sowie weitere alternative Ausgestaltungsmöglichkeiten werden nachfolgend mittels eines Beispiels beschrieben.

Die erfindungsgemäße Vorrichtung und das erfindungsgemäße Verfahren weisen eine Reihe von erheblichen Vorteilen auf:

- Mit der erfindungsgemäßen Vorrichtung ist die quantitative Erfassung und Auswertung des Gleichgewichtsverhaltens des Menschen im Stehen möglich. Mit den erfassten Kenngrößen kann letztendlich eine Sturzwahrscheinlichkeit bestimmt werden.

- Es kann insbesondere der zeitliche Verlauf und die Feinheit der sensomotorischen Regelung des Menschen beim Tandem-Stand erfasst werden sowie die Fähigkeit, bis zu welcher Zeit der Tandem-Stand gehalten werden kann.

- Die Erfindung erlaubt es, Störungen des spinalmotorischen und des supraspinalmotorischen Systems des Menschen abzubilden und zu quantifizieren. Durch Variation der Testbedingungen (so sind neben dem Tandem-Stand auch Überprüfungen des einbeinigen Standes möglich und die Überprüfungen können bei offenen oder geschlossenen Augen stattfinden) können mit den erfassten Kenngrößen die Quellen der Störungen eingegrenzt werden. Durch Verlaufsuntersuchungen können somit letztendlich Veränderungen erfasst werden. Mittels Trainings- oder Behandlungsmaßnahmen können dann Verbesserungen an defizitären Stellen der Systeme, z.B. der motorischen Muskelleistung, kontrolliert werden. Die direkte Auswirkung von Störungen in den Systemen besteht in einer Veränderung der Sturzwahrscheinlichkeit, die einen wesentlichen Bestandteil des Knochenbruchrisikos darstellt.

- Die Bedeutung der Erfindung liegt somit insbesondere in der Möglichkeit, mit dem Sturzrisiko und/oder mit dem Knochenbruchrisiko assoziierte Daten, die ansonsten nur anamnestisch erhoben werden können, als Maß der willkürlichen und unwillkürlichen Reaktionsfähigkeit objektiv abzubilden bzw. zu quantifizieren. An gesunden Personen oder erkrankten Personen ist hierbei kein äußerer Eingriff erforderlich. Unter standardisierten Bedingungen erfolgt die Bestimmung alters- und geschlechtsspezifischer Normwerte, die als Grundlage zur Beurteilung von gesundheitlichen Beeinträchtigungen herangezogen werden.

- Die Erfindung kann insbesondere vorteilhaft auf dem Gebiet der Gesundheitsvorsorge und der Überprüfung der körperlichen Fitness der untersuchten Personen eingesetzt werden. Insbesondere kann mit der Erfindung auch der Einfluss von Drogen und Alkohol objektiv bestimmt werden. Im Zusammenhang mit Medikamenteneinnahmen können sowohl unerwünschte Nebenwirkungen als auch der Einfluss der Multimedikation auf Personen geprüft werden. Der Einsatzbereich der Erfindung umfasst darüberhinaus auch die Diagnose und Überwachung der Verkehrstüchtigkeit von Personen.

- Ebenso kann die erfindungsgemäße Vorrichtung als Diagnosemittel bei Patienten unter Rehabilitationsmaßnahmen, z.B. nach apoplektischem Insult, und bei Personen, die an Erkrankungen des Gleichgewichtsorgans leiden, genutzt werden.

In den nachfolgenden, dem Beispiel zugehörigen Figuren sind dieselben Vorrichtungsbestandteile mit identischen Bezugszeichen versehen.

Figur 1 zeigt die Kraftaufnahmeeinheit bzw. die Messeinheit einer erfindungsgemäßen Kraftauswertevorrichtung.

Figur 2 zeigt ein Blockschaltbild der Auswerteeinheit der Kraftauswertevorrichtung gemäß Figur 1.

Figur 3 zeigt die über ein Zeitintervall erfassen Ausgangssignale der Kraftaufnehmer der Ausgestaltungsform von Figur 1 sowie deren Summensignal (Gesamtsignal).

Figur 4 zeigt das Leistungsspektrum, welches aus dem in Figur 3 gezeigten Gesamtsignal berechnet wurde.

Figur 5 zeigt die nach der Größe sortierten positivwertigen lokalen Maxima der zeitlichen Ableitung des Gesamtsignals aus Figur 3 sowie den daraus berechneten Mittelwert.

Figur 6 skizziert die Bewegung des dynamischen Schwerpunktes in der Kraftaufnehmerebene während des Zeitintervalls der Messung.

Figur 7 zeigt drei Beispiele für die vom dynamischen Schwerpunkt in der Kraftaufnehmerebene überstrichene Fläche.

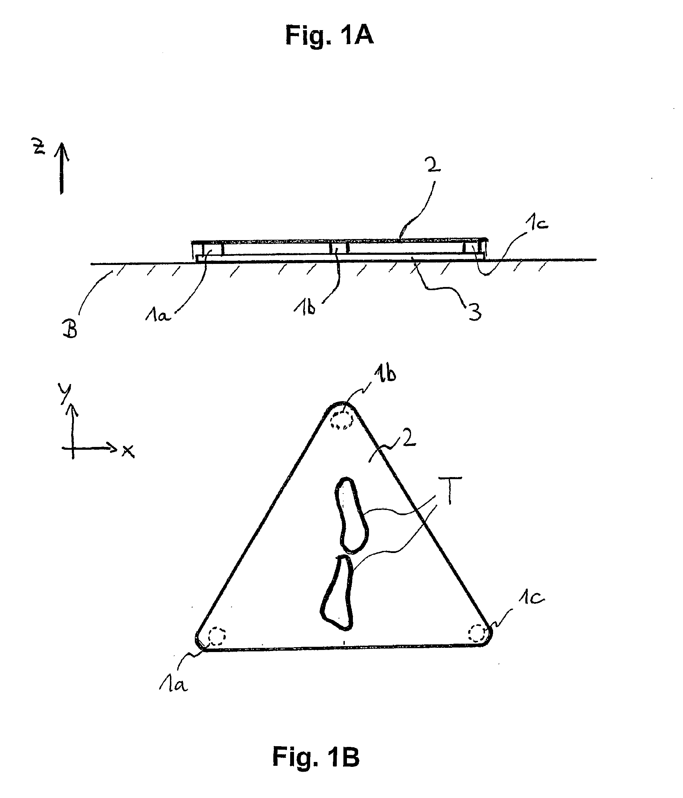

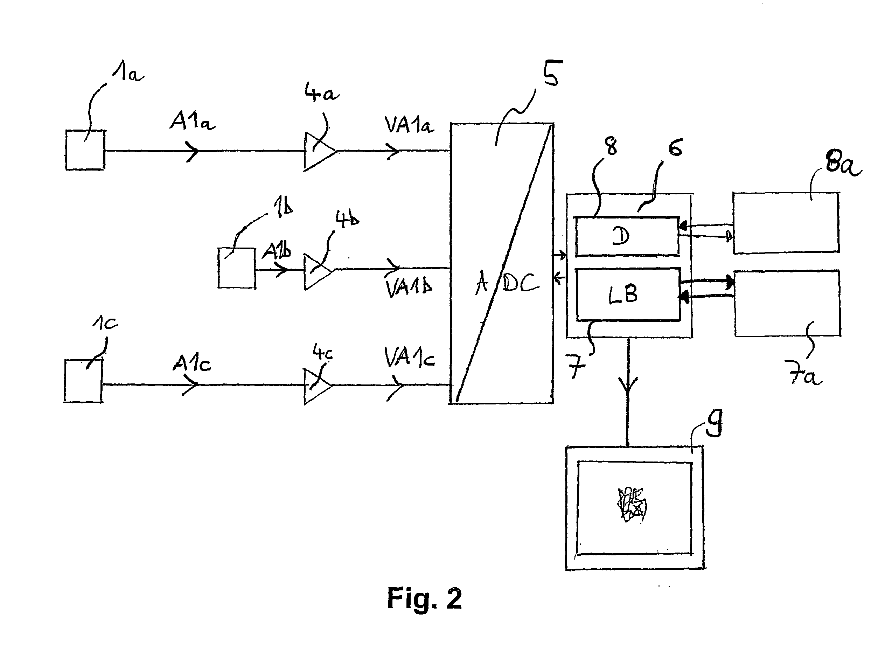

Figur 1A zeigt eine Schnittansicht durch eine erfindungsgemäße Kraftauswertevorrichtung senkrecht zur Kraftaufnehmerebene. Figur 1B zeigt eine Aufsicht auf diese Kraftauswertevorrichtung bzw. eine Aufsicht auf die Kraftaufnehmerebene. In Figur 1 sind lediglich die zur Krafterfassung notwendigen Bestandteile der Kraftauswertevorrichtung (also die Bestandteile der Messeinheit der Kraftauswertevorrichtung) gezeigt. Die Auswerteeinheit zur Auswertung der erfassten Kräfte ist im Blockschaltbild von Figur 2 (siehe nachfolgend) gezeigt. Die Messeinheit und die Auswerteeinheit stehen miteinander in Verbindung, um Daten auszutauschen. Die Kraftauswertevorrichtung weist eine starre, ebene, dreieckförmige Bodenplatte 3 auf. Diese ist im vorliegenden Fall aus Stahl gefertigt. Die Dreiecksform ist durch ein gleichseitiges Dreieck mit einer Kantenlänge von hier 60 cm definiert. Die drei Dreiecksspitzen der Bodenplatte sind abgerundet. Die Bodenplatte 3 weist eine Dicke (senkrecht zur Kraftaufnehmerebene, also in z-Richtung) von 1 cm auf. Die Bodenplatte ist im gezeigten Fall oberhalb einer ebenen Bodenfläche B und angrenzend an diese angeordnet. Auf der Bodenplatte 3 sind im Bereich der Dreiecksspitzen drei Kraftaufnehmer 1a bis 1c (nachfolgend alternativ auch als Kraftsensoren oder Kraftmessdosen bezeichnet) angeordnet. Die Kraftmessdosen sind auf der Bodenplatte 3 angeschraubt, können jedoch beispielsweise auch aufgeklebt werden. Die drei Kraftmessdosen sind in einer Ebene (Kraftaufnehmerebene) in Form eines gleichseitigen Dreiecks angeordnet. Jede Kraftmessdose ist hierbei im Bereich der Dreiecksspitze der Bodenplatte geringfügig (wenige cm) vom umlaufenden Rand der Bodenplatte beabstandet, angeordnet, so dass das gleichseitige Dreieck, welches durch die drei Kraftmessdosen 1a bis 1c gebildet wird, eine Seitenlänge von etwa 55 cm aufweist. Oberhalb der drei Kraftmessdosen 1a bis 1c ist eine ebenfalls in Form eines gleichseitigen Dreiecks ausgebildete Trägerplatte 2 angeordnet. Bei der Trägerplatte handelt es sich um eine bruchsichere, von einer Person mit einem Gewicht bis ca. 200 kg betretbare Platte, welche verrutschsicher auf die drei Kraftmessdosen 1a bis 1c aufgelegt ist. Von oben (d.h. von der den Kraftmessdosen gegenüberliegenden Seite) auf die Trägerplatte 2 einwirkende Kräfte bzw. Drücke können somit auf die drei entkoppelten Kraftmessdosen 1a bis 1c anteilig übertragen werden. Die starre, betretbare Trägerplatte 2 weist parallel zur Kraftaufnehmerebene (die durch die Anordnung der drei Kraftaufnehmer 1 ausgebildet wird) dieselbe Form und Größe auf wie die Bodenplatte 3. Bei der Trägerplatte 2 handelt es sich hier um eine doppelte ESG-Glasplatte nach DIN 1249 mit einer Dicke von 16 mm.

Die Aufnehmerachsen der drei Kraftaufnehmer 1a bis 1c sind hier parallel zueinander und in z- Richtung bzw. senkrecht zur Kraftaufnehmerebene (x- y- Ebene) angeordnet. Die Aufnehmerachse eines Kraftaufnehmers ist dadurch definiert, dass eine längs dieser Achse auf dem Kraftaufnehmer 1 einwirkende Kraft oder Kraftkomponente vom Kraftaufnehmer bestimmt bzw. erfasst wird.

Bei den zwischen der Bodenplatte 3 und der Trägerplatte 2 angeordneten Kraftaufnehmern 1a bis 1c handelt es sich um kommerziell erhältliche Kraftmessdosen. Im vorliegenden Fall werden Messdosen verwendet, welche eine maximale Last von 2000 N bzw. 2 kN bei einer Deformation bzw. einem Nennmessweg in Aufnehmerachsrichtung von 0,2 mm aufweisen. Die verwendeten Kraftmessdosen weisen bezüglich der erfassten Kräfte eine Genauigkeitsklasse von < 0,1 % auf. Der Nennkennwert (Sensitivität) bzw. die Signalspannung der drei Messdosen beträgt jeweils 2 mV/V. Im vorliegenden Fall werden die Kraftmessdosen "K-450" der Firma "ATP Messtechnik + Waagen" verwendet.

In Figur 1B ist darüberhinaus der Tandem-Stand T skizziert, den eine auf der Trägerplatte 2 stehende Person während der Erfassung und Auswertung der auf die Kraftaufnehmer 1a bis 1c ausgeübten Kräfte einnehmen sollte.

Figur 2 zeigt ein Blockschaltbild der erfindungsgemäßen Kraftauswertevorrichtung der Figur 1, bei dem sowohl die Messdosen der in Figur 1 gezeigten Messeinheit als auch die zur Signalauswertung nachgeschalteten Bestandteile 4, 5, 6, 7, 8 der Auswerteeinheit sichtbar sind. Jeder der Kraftmessdosen 1a bis 1c ist jeweils ein Operationsverstärker 4a bis 4c signalausgangsseitig nachgeschaltet. Betritt somit eine Person die Trägerplatte 2, so werden die von den Kraftmessdosen 1a bis 1c generierten analogen Ausgangssignale A1a bis A1c mittels geeigneter Signalleitungen an die Operationsverstärker 4 übertragen. Die Operationsverstärker verstärken die analogen Signale um den Faktor 150 oder 300 (es können jedoch auch andere Verstärkerfaktoren verwendet werden). Die drei nunmehr verstärkten analogen Signale VA1a bis VA1c werden über geeignete Signalleitungen einem den Operationsverstärkern 4 nachgeschalteten Analog-Digital-Konverter ADC 5 mit drei Eingangskanälen zugeführt.

Der ADC 5 ist ausgangsseitig mit einem Steuercomputer (PC) 6 verbunden. Im vorliegenden Fall handelt es sich bei dem ADC um den Typ "miniLAB 1008" der Firma Measurement Computing Corporation. Im vorliegenden Fall sind die Operationsverstärker 4 sowie der ADC 5 zwischen der Bodenplatte 3 und der Trägerplatte 2 innerhalb des durch die drei Kraftmessdosen 1a bis 1c gebildeten Dreiecks angeordnet (in Figur 1 nicht gezeigt). Dies hat den Vorteil, dass die Datenleitungen zur Übertragung der Signale A1a bis A1c bzw. VA1a bis VA1c kurz sind. Die ADC-Ausgangssignale werden dann über eine USB-Leitung über einen USB-Anschluss des PC 6 in letzteren übertragen. Der ADC 5 kann jedoch auch als mehrkanalige Datenaquisitionskarte ausgebildet sein, welche innerhalb des Computers 6 angeordnet ist. Der ADC 5 erzeugt somit aus den elektrischen Spannungen, die aufgrund der Druckbelastung der Trägerplatte 2 von den Messdosen 1a bis 1c generiert werden, USB-konforme Signale, die in den Steuercomputer 6 eingespeist werden. Die Messwerte der Kraftmessdosen 1 bzw. die entsprechenden Spannungen werden hierbei in Echtzeit von dem ADC 5 digitalisiert.

Es erfolgt jedoch nicht nur eine Datenübertragung vom ADC 5 zum Computer 6, umgekehrt kann der Steuercomputer 6 auch das Zeitfenster der Öffnung der Messkanäle des ADC 5 über zugehörige Hilfssoftware ansteuern. Somit wird das Messintervall, über das die mittels der Kraftsensoren 1 erfassten Kraftwerte digitalisiert und ausgewertet werden, festgelegt. Der ADC 5 erzeugt somit Messwertzeitreihen der drei Messdosen 1a bis 1c, die zur weiteren Verarbeitung im Computer 6 zur Verfügung stehen. Die Spannungsversorgung des ADC erfolgt hier mit einem Schaltnetzteil, das stabilisiert 12 V abgibt.

Im vorliegenden Fall sind die Leistungsspektrum-Berechnungseinheit 7 sowie die Differenziereinheit 8 Bestandteile des Computers 6. Beide Einheiten 7, 8 weisen jeweils eine Recheneinheit und einen Speicher samt einer darin gespeicherten Befehlsfolge 7a, 8a auf. Der Speicher und die Recheneinheit der Leistungsspektrum-Berechnungseinheit 7 (in der Figur auch mit LB bezeichnet) und der Differenziereinheit 8 (in der Figur auch mit D bezeichnet) sind hier identisch. Alternativ können jedoch auch für beide Einheiten getrennte Speicher und/ oder Recheneinheiten verwendet werden.

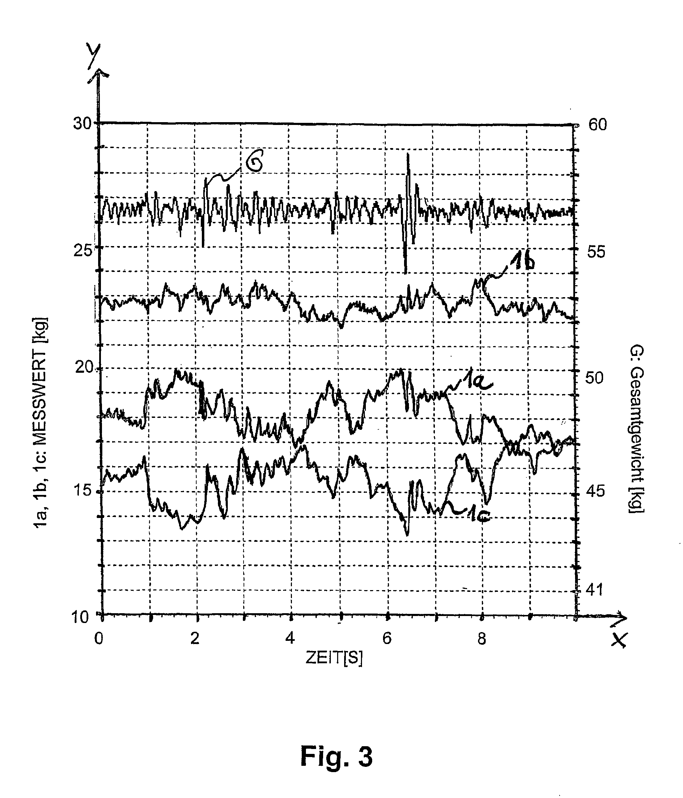

Die drei mittels der drei Kraftmessdosen 1, drei Operationsverstärker 4 und des ADC 5 erfassten und digitalisierten Messwert-Zeitreihen über das Messintervall (also die Messkurven über eine einstellbare Zeitspanne bzw. ein einstellbares Zeitintervall) werden im Computer 6 addiert (siehe Figur 3). Aus diesem addierten Summensignal bzw. Gesamtsignal berechnet die Leistungsspektrum-Berechnungseinheit 7 das Leistungsspektrum des Gesamtsignals. Dies geschieht mit der im Speicher der Leistungsspektrum-Berechnungseinheit 7 gespeicherten Befehlsfolge 7a. Ebenso berechnet die Differenziereinheit 8 aus dem Gesamtsignal die zeitliche Ableitung des Gesamtsignals im Messintervall. Aus dieser zeitlichen Ableitung werden dann, wie nachfolgend beschrieben, weitere Kenngrößen berechnet. Die Berechnung der Differenziereinheit 8 geschieht mit der im Speicher der Differenziereinheit 8 abgelegten Befehlsfolge 8a. Die beiden beschriebenen Befehlsfolgen werden hier mittels der Programmiersprache Delphi erzeugt bzw. kompiliert. Es können jedoch auch andere Programmiersprachen, wie beispielsweise C++ eingesetzt werden. Das verwendete Betriebssystem ist im vorliegenden Fall Windows XP.

Die Ergebnisse der Berechnung können graphisch von dem Computer 6 auf der Ausgabeeinheit 9 (beispielsweise einem Bildschirm) dargestellt werden. Die beschriebenen Programme bzw. Befehlsfolgen können darüberhinaus auch die kalibrierten Sollwerte der Sensoren 1 überprüfen. Mit den beschriebenen Programmen können darüberhinaus auch die Verstärkungsfaktoren der Vorverstärker, die Abtast- bzw. Samplingraten des ADC 5 und die Messdauer bzw. das Zeitintervall der Datenerfassung angepasst werden. Im vorliegenden Fall beträgt die Samplingrate 100 Hz (generell: mindestens 50 Hz), die Verstärkungsfaktoren wie bereits beschrieben 150 oder 300 und die Messdauer 10 s. Es können jedoch auch andere Werte verwendet werden.

Wie Figur 3 zeigt, errechnet der Computer 6 über das Zeitintervall aus den einzelnen abgetasteten bzw. gemessenen Kraftmesswerten der drei Kraftaufnehmer 1a bis 1c zu jedem Abtastzeitpunkt im Messintervall die Summe der Messwerte. Hierdurch ergibt sich das Gesamtsignal G. Als erste Kenngröße wird nun das über das Zeitintervall (hier 10 s, x-Achse in Figur 3) gemittelte Gesamtsignal ermittelt. Dieser Mittelwert von G ist ein Maß für die Masse des Körpers bzw. der Person auf der Trägerplatte 2.

Die in Figur 3 gezeigte Gesamtmesswert-Zeitreihe G oder aber auch die einzelnen Messwert-Zeitreihen 1a bis 1c bzw. beliebige Summenkombinationen dieser drei Messwert-Zeitreihen können nun zur weiteren Verarbeitung in der Leistungsspektrum-Berechnungseinheit 7 oder der Differenziereinheit 8 ausgewählt werden.

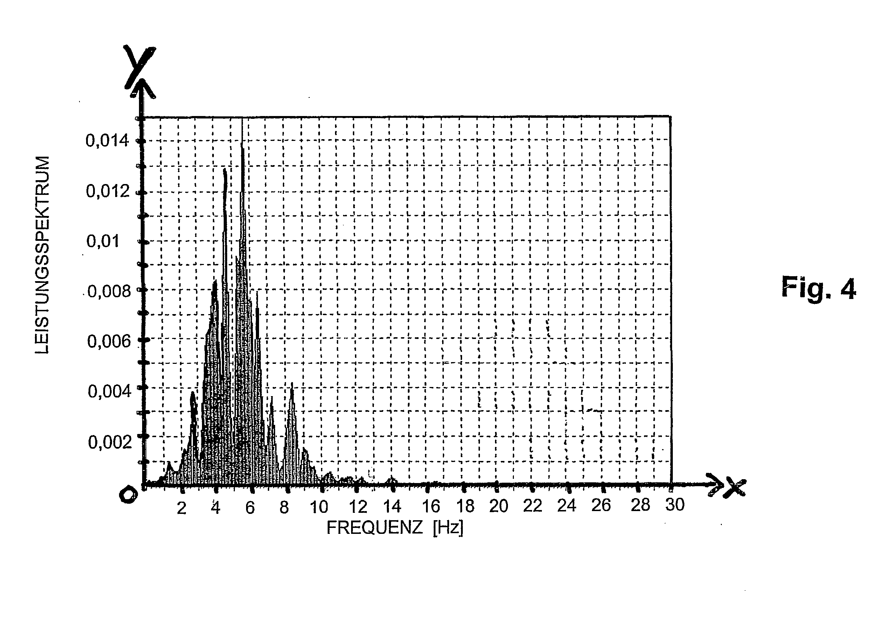

So zeigt Figur 4 das Leistungsspektrum bzw. Powerspektrum des Gesamtsignals G aus Figur 3. Dieses Leistungsspektrum wurde mittels der Leistungsspektrum-Berechnungseinheit samt der darin abgelegten Befehlsfolge 7a berechnet. Basis der Berechnung ist hier eine Abtastung der analogen Ausgangssignale VA1a bis VA1c durch den ADC 5 mit einer Abtastrate von mindestens 50 Hz. Im vorliegenden Fall wurde mit 100 Hz abgetastet. Der Mindestwert von 50 Hz entspricht hierbei etwa dem Vierfachen der zu erwartenden Frequenzen. Bei einer solchen Abtastrate zeigen sich niedrige Kraftimpulse, die überwiegend durch die Flexorengruppe der Fußmuskulatur und der Peroneusmuskeln der während des Messintervalls auf der Trägerplatte 2 stehenden Person erzeugt werden.

Zur Berechnung des Leistungsspektrums wurde die Zeitreihe G der Kräftesumme der drei Sensoren 1a bis 1c einer Frequenzzerlegung unterzogen. Dies wurde im vorliegenden Fall mittels der Methode der Fourier-Transformation, hier insbesondere der Fast-Fourier-Transformation FFT durchgeführt. Alternativ zum FFT-Verfahren kann jedoch auch eine Frequenzzerlegung mit der Methode der maximalen Entropie mittels der Leistungsspektrum-Berechnungseinheit 7 durchgeführt werden (zur Methode der maximalen Entropie sowie der Fast-Fourier-Transformation siehe beispielsweise "Numerical Recipes" in Pascal: The art of Scientific Computing, William H. Preis, Brian P. Flannery, Saul A. Teukolsky, William T. Vetterling, Cambridge University Press, 1989).

Die Methode der maximalen Entropie bietet hierbei den Vorteil einer höheren Auflösung.

Die Leistungsspektrum-Berechnungseinheit 7 führt mittels des Programmcodes 7a somit eine Analyse der Frequenzanteile in den Kraftimpulsen (Spektralanalyse) durch. Das ermittelte Leistungsspektrum bzw. Powerspektrum ist in Figur 4 im Bereich von 0 Hz bis 30 Hz dargestellt. Wie die Figur zeigt, finden sich Muskelkraftaktionen hauptsächlich im Bereich von 0 bis etwa 13 Hz.

Das Leistungsspektrum wird dann mittels der Einheit 7 weiter ausgewertet. Es werden arithmetische oder geometrische Mittelwerte der auftretenden Frequenzen bzw. Durchschnittsfrequenzen bestimmt. Diese erlauben eine Aussage über die Reaktionsfähigkeit der Testperson: Je höher die Durchschnitts-frequenzen sind, desto höher ist die Reaktionsfähigkeit der Person.

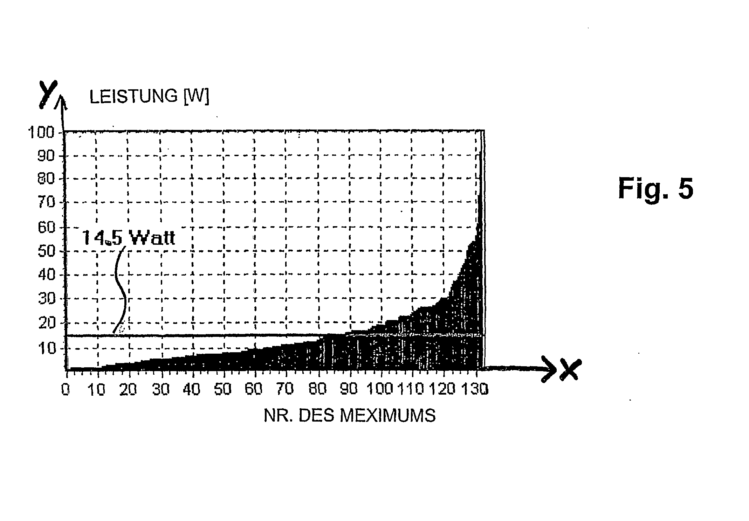

Figur 5 zeigt ein Beispiel für die mittels der Differenziereinheit 8 und der Programmfolge 8a bestimmten Kenngrößen. Sind wie im vorliegenden Fall die Kraftimpulse der Summenkurve bzw. des Gesamtsignals G (vgl. Figur 3) aufgrund der verwendeten Sampling-bzw. Abtastrate (hier 100 Hz, generell sind erfindungsgemäß Abtastraten zwischen 50 und 250 Hz zu verwenden) hoch genug aufgelöst, so kann das in Figur 3 gezeigte Gesamtsignal G nach der Zeit numerisch differenziert werden. Die numerische Differenziation kann hierbei, wie nachfolgend kurz beschrieben, mittels eines vereinfachten Stützstellenverfahrens durchgeführt werden. Hierfür wird zunächst eine Stützpunktzahl festgelegt. Diese beträgt bevorzugt zwischen 5 und 15 Stützpunkte. Im vorliegenden Fall wurden 10 Stützpunkte verwendet. Ausgehend von jedem Messwert bzw. Abtastwert der in Figur 3 gezeigten Summenkurve G wird die lokale Steigung zwischen diesem Messwert und dem diesem Messwert um die genannte Stützpunktanzahl zeitlich nachfolgenden Messwert bestimmt. Ist die aus den beiden um die genannte Stützpunktzahl auseinander liegenden Messwerten bestimmte Steigung positiv, so werden die beiden Messwerte, mittels derer die Steigung bestimmt wird, in der Gesamtsummenkurve G jeweils um einen Messwert zeitlich nach hinten versetzt (also die jeweils um einen Abtastwert später liegenden Messwerte zur Steigungsbestimmung herangezogen) und es wird erneut die lokale Steigung bestimmt. Ist diese lokale Steigung größer als die im vorhergehenden Schritt bestimmte, so wird das Verfahren fortgesetzt, d.h. das Messwertpaar, mittels dessen die Steigung bestimmt wird, wird jeweils um einen weiteren Messwert zeitlichen nach hinten verschoben. Das Verfahren bricht dann ab, wenn die lokal bestimmte Steigung nicht mehr zunimmt, wieder abnimmt oder negativ wird. Die davor, also im vorletzten Schritt bestimmte lokale Steigung (also der lokale Maximalwert) wird als Impulsspitzenwert im Speicher vermerkt. Das Verfahren schreitet nun so lange fort, bis die lokale Steigung wieder zunimmt und dabei einen positiven Wert annimmt. Anschließend wird wie beschrieben wieder der lokal vorliegende Impulsspitzenwert bestimmt und vermerkt. Somit ergibt sich bei der beschriebenen Abtastung der gesamten Summenkurve G eine Menge von Impulsspitzenwerten, die jeweils lokal auftretende maximale Steigungen mit unterschiedlichem positiven Wert darstellen. Diese Menge kann anschließend analysiert werden. So ist es beispielsweise möglich, ein Histogramm der Menge aufzustellen und einen Mittelwert bzw. eine mittlere Impulsspitzenleistung zu berechnen. Alternativ können auch, wie in Figur 5 dargestellt ist, die einzelnen erfassten Impulsspitzenwerte der Größe nach sortiert werden (x-Achse in Figur 5). Im Bereich des Ursprungs sind dann die kleinsten (positiven) lokalen Impulsspitzenwerte aufgetragen, während mit zunehmendem Abstand vom Ursprung auf der x-Achse die größer werdenden lokalen Impulsspitzenwerte aufgetragen sind. Auch hier kann dann der mittlere Impulsspitzenwert bestimmt werden (horizontale Linie).

Die beschriebenen Impulsspitzenwerte sind nun ein Maß für die zum entsprechenden Zeitpunkt auftretende Spitzenleistung, welche von der auf der Trägerplatte 2 stehenden Person zur Haltung des Gleichgewichts ausgeübt wird. Dies ergibt sich aus der folgenden Betrachtungsweise: Die Differenzierung einer Kraft nach der Zeit ergibt die Muskelleistung, wenn die geleistete Arbeit (Arbeit = Kraft * Weg) bekannt ist. Die Leistung ist physikalisch definiert als die pro Zeiteinheit geleistete Arbeit. Die Arbeit ergibt sich jedoch im vorliegenden Fall aus der Kraft gegen den "Federweg" der Kraftaufnehmer 1. Somit kann die Differenziereinheit 8 bzw. das Programm 8a auf die beschriebene Art und Weise die lokalen maximalen Impulsspitzenleistungen der einzelnen positiven Kräfteanstiege herausfiltern. Aus diesen Impulsspitzenleistungswerten, deren Spektrum, wie in Figur 5 gezeigt, sortiert dargestellt werden kann, kann dann der mittlere Impulsspitzenleistungswert berechnet werden.

Die notwendige Leistung, die erforderlich ist, um einen Körper in die neutrale Schwerpunktlage bzw. in die Gleichgewichtslage zurückzubringen, ist natürlich auch abhängig von der Körpermasse. Somit wird als weitere Kenngröße das Verhältnis aus dem genannten mittleren Impulsspitzenleistungswert und dem zeitlichen Mittel der Summenkurve G über das Messintervall berechnet. Das genannte Verhältnis bzw. die Division des mittleren Impulsspitzenleistungswertes durch die Körpermasse ergibt somit die mittlere Impulsspitzenleistung pro Körpermasse (spezifische mittlere Impulsspitzenleistung). Dieser Wert ist dann unabhängig von der Körpermasse des jeweils untersuchten Individuums vergleichbar.

Die mittlere Impulsspitzenleistung (horizontale Linie) bzw. die hieraus berechnete spezifische mittlere Impulsspitzenleistung (mittlere Impulsspitzenleistung pro Körpermasse) ist ein Maß für den Kraftaufwand und/oder den Leistungsaufwand, den eine auf der Trägerplatte 2 stehende Person zum Halten des Gleichgewichts aufwenden muss.

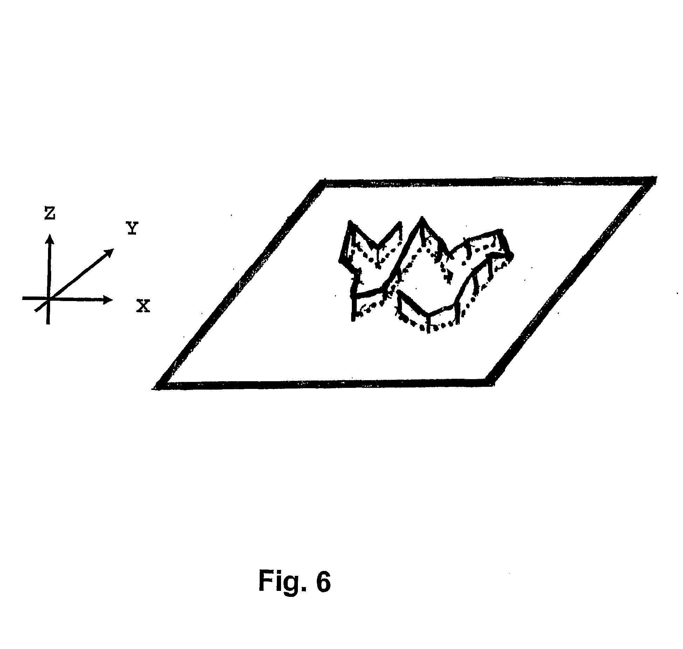

Die Berechnung einer weiteren Kenngröße ist in Figur 6 dargestellt. Diese Figur skizziert, wie mittels der Signalunterschiede der drei entkoppelten Kraftmessdosen 1a bis 1c eine Berechnung der Lage des dynamischen Massenschwerpunkts der auf der Trägerplatte 2 stehenden Person bestimmt wird. Der dynamische Schwerpunkt lässt sich aus einem aus der Personenmasse resultierenden statischen Anteil (statischer Schwerpunkt der Person) und aus einem aus der von der Person mittels Muskelkräften auf die Trägerplatte 2 ausgeübten Kraft resultierenden Anteil zusammensetzen. Hierzu wird zunächst ein orthogonales Koordinatensystem gewählt, dessen x-y-Ebene der Kraftaufnehmerebene K entspricht. Die x-y-Ebene des Koordinatensystems liegt somit in der Ebene, die von den drei Auflagepunkten der Kraftmessdosen 1a bis 1c gebildet wird. Über das Messintervall bzw. das erfasste Zeitintervall wird nun die Ortsveränderung des dynamischen Schwerpunktes bzw. die Spur des Schwerpunktes des Kraftvektors aus dem Körpergewicht und dem Zusammenspiel der Muskelkräfte (letzteres stellt den dynamischen Schwerpunktanteil dar) berechnet. Die Berechnung erfolgt hierbei für die Projektion des dynamischen Schwerpunktes auf die x-y-Ebene bzw. die Kraftaufnehmerebene. Die Berechnung kann für jeden Abtastzeitpunkt beispielsweise anhand der einfachen Formel

$$\sum_{i=1}^{N} \frac{m_i}{m_{ges.}} \vec{r_i}$$

erfolgen. N ist hierbei die Anzahl der Kraftaufnehmer (hier N=3), i bezeichnet den i-ten dieser Kraftaufnehmer (i=1,2 oder 3). $m_i$ bezeichnet den Messwert des i-ten Kraftaufnehmers zum Messzeitpunkt, $m_{ges.}$ bezeichnet die Summe über die Messwerte der drei Kraftaufnehmer zu diesem Zeitpunkt und $\vec{r_i}$ bezeichnet den Ortsvektor des i-ten Kraftaufnehmers im gezeigten orthogonalen Koordinatensystem. Würde die Person auf der Trägerplatte 2 absolut ruhig stehen, würde die Projektion des dynamischen Schwerpunktes bzw. des Kraftvektors auf die Kraftaufnehmerebene K genau einen Punkt in der Kraftaufnehmerebene ergeben (kein dynamischer Anteil, nur statischer Schwerpunktanteil). Eine auf der Trägerplatte 2 stehende Person kann jedoch nicht vollständig ruhig stehen, Schwankungen des Körperschwerpunktes haben somit muskuläre Korrekturkräfte zur Folge. Somit führt der dynamische Schwerpunkt bzw. dessen Projektion auf die x-y-Ebene während des Messintervalls eine Wanderung durch. Die-se ist in Figur 6 gezeigt (gepunktete Linie: Spur des dynamischen Schwerpunkts). Zusätzlich ist hier noch eine weitere Kenngröße in der dritten Dimension (d.h. auf der z-Achse) skizziert. Diese Größe bestimmt sich aus der Summe der zum jeweiligen Abtastzeitpunkt erzeugten Signale der drei Messdosen (also einem Wert der Summenkurve G in Figur 3) abzüglich des zeitlichen Mittels der Summenkurve G über das Messintervall (z: Betrag des Kraftvektors senkrecht zur Platte).

Es wird somit der zeitliche Verlauf der Ortsveränderung des dynamischen Schwerpunktes in der Plattformebene bzw. Kraftaufnehmerebene K berechnet, welche aus der Wanderung des Massenschwerpunktes und den zeitlich veränderlichen Beschleunigungskräften der Muskulatur zur Aufrechterhaltung und Korrektur des Gleichgewichts resultiert. Diese Ortsveränderung (x (t), y (t) ) (t = Zeit) wird somit für alle Abtast- bzw. Messzeitpunkte im Messintervall bestimmt und vom Computer 6 gespeichert. Als dritte Komponente (z (t)- Komponente) wird die regulative Beschleunigungskraft, welche sich durch Subtraktion des statischen Körpergewichtes von dem momentanen, durch die Messkraftdosen registrierten Gesamtimpuls bzw. der Summe der Einzelimpulse ergibt, in Echtzeit errechnet und gespeichert. Das statische Körpergewicht wird hierbei erst nach Abschluss der Messung berechnet (ebenso wie die Summenkurve G aus den drei Signalen bzw. den drei einzelnen Messwert- Zeitreihen), wenn der allokierte Pufferspeicher im PC ausgelesen ist.

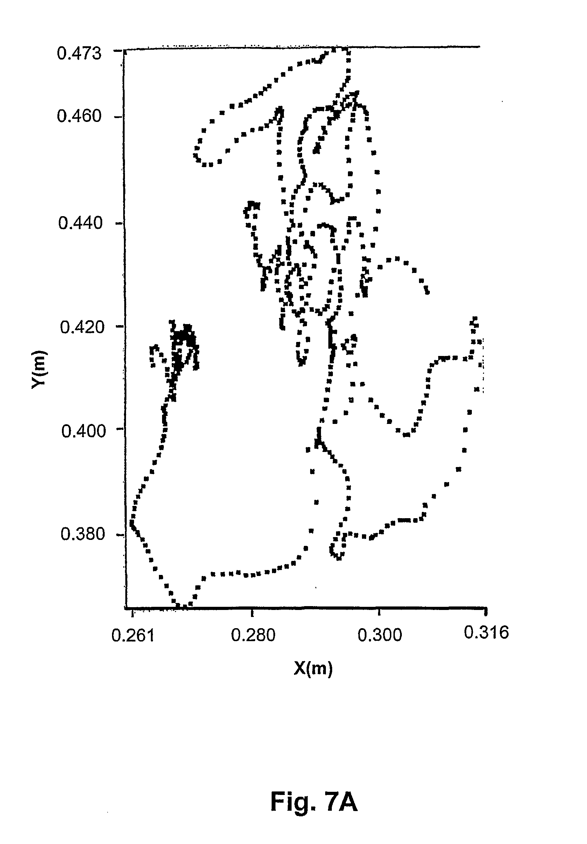

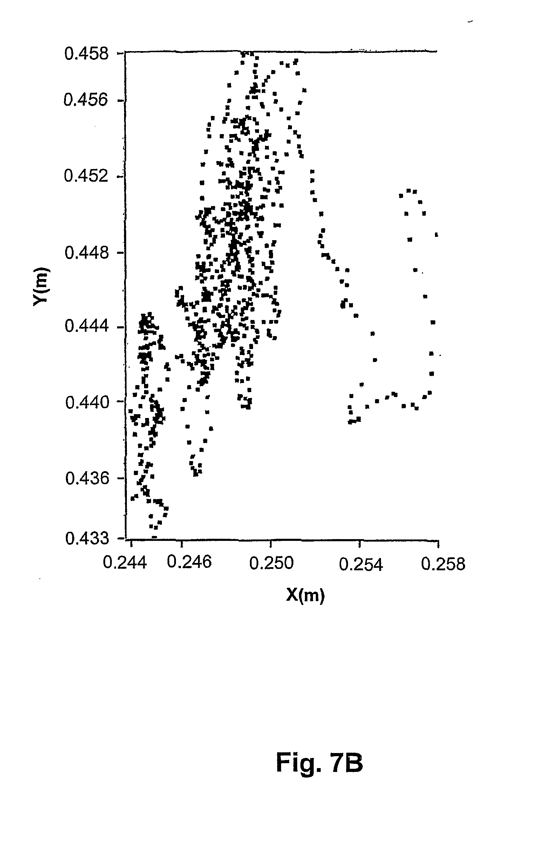

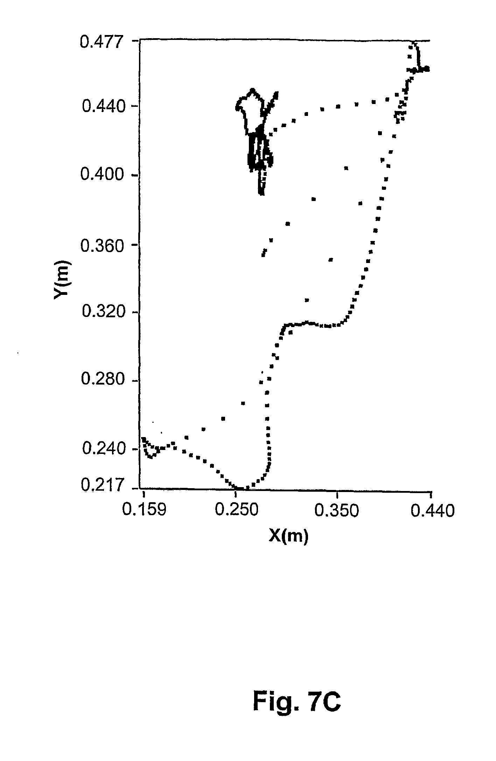

Figur 7 zeigt drei Beispiele für die von der Wanderung der Schwerpunktlage (x, y) in der Ebene K während des Messintervalls überstrichenen Fläche. Mittels der Auswerteeinheit, hier mittels des PC wird die überstrichene Fläche quantitativ erfasst. Im in Figur 7A gezeigten Fall beträgt die Fläche etwa $5,5 * 10,7$ cm$^2$. Im in Figur 7B gezeigten Fall beträgt die Fläche lediglich $1,4 * 2,5$ cm$^2$. In Figur 7C beträgt die überstrichene Fläche etwa $28,1 * 26$ cm$^2$. Die entsprechend überstrichene Fläche ist nun ein Maß für die Fähigkeit der jeweiligen Person (A bzw. B bzw. C), während des Messintervalls das Gleichgewicht auf der Trägerplatte 2 zu halten. Je kleiner die überstrichene Fläche ist, desto besser ist diese Fähigkeit ausgeprägt. Die überstrichenen Flächen bzw. die metrischen Ausdehnungen im Koordinatensystem in der x-y-Ebene von verschiedenen Personen können nun miteinander verglichen werden. Dies erlaubt beispiels-weise Rückschlüsse auf mögliche Erkrankungen der untersuchten neuromuskulären Funktionen. So belegen die drei gezeigten Ergebnisse deutliche Unterschiede zwischen einer gesunden Person ohne Sturzrisiko (B), einer Person mit geringem Risiko (A) und einer stark sturzgefährdeten Person (C). Es ist hierbei zu erwarten, dass die überstrichene Fläche bzw. die metrische Ausdehnung im x-y-Diagramm in erster Näherung unabhängig vom Alter der untersuchten Person, jedoch stark abhängig von anderen Einflüssen, wie beispielsweise auch einer Medikamenteneinnahme, einer Einnahme von Alkohol und/oder Drogen, Störungen beim Halten des Gleichgewichts im Allgemeinen wie auch nach apoplektischem Insult oder Erkrankungen des Gleichgewichtsorgans ist.

**Patentansprüche**

1. Kraftauswertevorrichtung mit welcher auf Kraftaufnehmer einwirkende Kräfte zeitaufgelöst bestimmbar und auswertbar sind, mit
genau drei in einer Kraftaufnehmerebene in Form eines Dreiecks angeordneten Kraftaufnehmern (1) mit jeweils einem Signalausgang,
einer mit den Kraftaufnehmern (1) gekoppelten, starren, begehbaren Trägerplatte (2), wobei die Kraftaufnehmer (1) auf einer Seite der Trägerplatte (2) angrenzend an diese angeordnet sind, wobei die aus einer auf die Trägerplatte (2) einwirkenden Druckkraft an den Kraftaufnehmern (1) resultierenden Kräfte von den Kraftaufnehmern (1) zeitaufgelöst erfassbar sind und wobei die Ausgangssignale der Kraftaufnehmer (1) jeweils mit einer Abtastrate von über 50 Hz und unter 250 Hz abtastbar sind, und
einer Auswerteeinheit (4, 5, 6, 7) mit der die Kraftaufnehmer (1) signalausgangsseitig verbunden sind und welche eine Leistungsspektrum-Berechnungseinheit (7) aufweist, mit der das Leistungsspektrum eines aus der Summe der Ausgangssignale der genau drei Kraftaufnehmer (1) gebildeten Gesamtsignals berechenbar ist,
wobei mit der Auswerteeinheit (4, 5, 6, 7) aus den Ausgangssignalen der Kraftaufnehmer (1) die auf die Kraftaufnehmerebene projizierte momentane Lage des dynamischen Schwerpunkts einer die Trägerplatte auf der den Kraftaufnehmern abgewandten Seite druckbelastenden Person und die während eines Zeitintervalls von dieser Lage oder ihrer Bewegungsspur in der Kraftaufnehmerebene überstrichene Fläche bestimmbar sind, und
wobei mit der Auswerteeinheit (4,5,6,7) das berechnete Leistungsspektrum hinsichtlich der in ihm enthaltenen Frequenzen auswertbar ist, indem das arithmetische und/oder das geometrische Mittel der enthaltenen Frequenzen berechnet wird/werden.

2. Kraftauswertevorrichtung nach dem vorhergehenden Anspruch,
*gekennzeichnet durch*
eine auf der der Trägerplatte (2) abgewandten Seite angrenzend an die Kraftaufnehmer (1) angeordnete Bodenplatte (3).

3. Kraftauswertevorrichtung nach einem der vorhergehenden Ansprüche,
*dadurch gekennzeichnet, dass*
mindestens einer der Kraftaufnehmer (1) ein Piezosensor ist.

**4.** Kraftauswerteverfahren mit welchem auf Kraftaufnehmer einwirkende Kräfte zeitaufgelöst bestimmt und ausgewertet werden,

wobei genau drei Kraftaufnehmer (1) mit jeweils einem Signalausgang in einer Kraftaufnehmerebene in Form eines Dreiecks und auf einer Seite einer starren, begehbaren Trägerplatte (2) angrenzend an diese angeordnet werden und mit der Träger-platte (2) so gekoppelt werden, dass die aus einer auf die Trägerplatte (2) einwirkenden Druckkraft an den Kraftaufnehmern (1) resultierenden Kräfte von den Kraftaufnehmern (1) zeitaufgelöst erfassbar sind,

wobei die Trägerplatte (2) auf der den Kraftaufnehmern (1) abgewandten Seite über ein Zeitintervall druckbelastet wird, indem eine Person die Trägerplatte begeht und/oder auf der Trägerplatte steht,

wobei die Ausgangssignale der Kraftaufnehmer (1) jeweils mit einer Abtastrate von über 50 Hz und unter 250 Hz abgetastet werden,

wobei für das Zeitintervall aus der Summe der durch die Druckbelastung an den Kraftaufnehmern (1) resultierenden Ausgangssignale der genau drei Kraftaufnehmer (1) ein zeitaufgelöstes Ge-samtsignal gebildet wird,

wobei das Leistungsspektrum des Gesamtsignals berechnet und hinsichtlich der in ihm enthaltenen Frequenzen ausgewertet wird, indem das arithmetische und/oder geometrische Mittel der enthaltenen Frequenzen berechnet wird/werden, und

wobei aus den Ausgangssignalen der Kraftaufnehmer (1) über das Zeitintervall die auf die Kraftaufnehmerebene projizierte momenta-ne Lage des dynamischen Schwerpunkts der Person und die während des Zeitintervalls von dieser Lage oder ihrer Bewegungsspur in der Kraftaufnehmerebene überstrichene Fläche bestimmt werden.

**5.** Kraftauswerteverfahren nach dem vorhergehenden Anspruch,
***dadurch gekennzeichnet, dass***
das zeitliche Mittel des Gesamtsignals über das Zeitintervall gebildet wird zur Bestimmung der mittleren Druckbelastung der Trägerplatte.

**6.** Kraftauswerteverfahren nach einem der zwei vorhergehenden Ansprüche,
***dadurch gekennzeichnet, dass***
der dynamische Schwerpunkt sich aus einem aus der Personenmasse resultierenden statischen Anteil und aus einem aus der von der Person mittels Muskelkräften auf die Trägerplatte ausgeübten Kraft resultierenden Anteil zusammensetzt.

**7.**
Kraftauswerteverfahren nach einem der drei vorhergehenden Ansprüche,
***dadurch gekennzeichnet, dass***
die momentane Lage des dynamischen Schwerpunkts gemäß $\sum_{i=1}^{N} \frac{m_i}{m_{ges.}} \vec{r_i}$ berechnet wird, wobei N die Anzahl der Kraftaufnehmer ist und i den i-ten Kraftauf-nehmer bezeichnet und wobei zum betrachteten Zeitpunkt $m_i$ der Messwert des i-ten Kraftaufnehmers, $m_{ges.}$ die Summe über die Mess-werte der N Kraftaufnehmer und $\vec{r_i}$ der Ortsvektor des i-ten Kraftaufnehmers in einem orthogonalen Koordinatensystem sind.

**8.** Kraftauswerteverfahren nach einem der vier vor-hergehenden Ansprüche,
***dadurch gekennzeichnet, dass***
das Verhältnis aus der für eine erste Person bestimmten überstrichenen Fläche und der für eine zweite, mit der ersten Person nicht identischen Person bestimmten überstrichenen Fläche berechnet wird.

**9.** Kraftauswerteverfahren nach einem der fünf vorhergehenden Ansprüche,
***dadurch gekennzeichnet, dass***
das Leistungsspektrum des Gesamtsignals mittels der Fourier-Transformation oder mittels der Methode der maximalen Entropie berechnet wird.

**10.** Kraftauswerteverfahren nach einem der sechs vorhergehenden Ansprüche,
***dadurch gekennzeichnet, dass***
das berechnete Leistungsspektrum hinsichtlich der in ihm enthaltenen Frequenzen ausgewertet wird, indem Maxima im Leistungsspektrum berech-net werden.

**11.** Verwendung einer Kraftauswertevorrichtung oder eines Kraftauswerteverfahrens nach einem der vorhergehenden Ansprüche zur Bestimmung oder Überwachung der Verkehrstüchtigkeit von Personen, zum Bestimmen des Einflusses von Alkohol oder Drogen auf die motorischen Fähigkeiten von Personen oder zum Bestimmen von Kenngrößen für die körperliche Fitness von Personen.

**Claims**

**1.** Force evaluating device with which forces acting on force transducers can be determined and evaluated in a time-resolved manner, having
precisely three force transducers (1), which are arranged in the shape of a triangle in a force transducer plane, each having a signal output,
a rigid support plate (2), which can be walked upon and which is coupled to the force transducers (1), wherein the force transducers (1) are arranged on one side of the support plate (2) bordering it, wherein the forces of the force transducers (1) resulting from a compressive force on the force transducers (1), which acts on the support plate (2), can be determined in a time-resolved manner and wherein the output signals of the force transducers (1) can each be scanned with a sampling rate of above 50 Hz and below 250 Hz, and

an evaluating unit (4, 5, 6, 7), with which the force transducers (1) are connected on the signal output side and which has a power spectrum calculation unit (7), with which the power spectrum of an overall signal, formed from the sum of the output signals of the precisely three force transducers (1), can be calculated,

wherein the current location, projected onto the force transducer plane, of the dynamic focus of a person pressure-loading the support plates on the side facing away from the force transducers, and the surface covered by this location or its movement path in the force transducer plane over a time period, can be determined with the evaluating unit (4, 5, 6, 7) from the output signals of the force transducer (1), and wherein the calculated power spectrum can be evaluated with the evaluating unit (4, 5, 6, 7) in terms of the frequencies which said power spectrum contains by calculating the arithmetical and/or geometrical average of the contained frequencies.

2. Force evaluating device according to the preceding claim,
   *characterised by*,
   a base plate (3) arranged on the side facing away from the support plate (2) bordering the force transducer (1).

3. Force evaluating device according to one of the preceding claims,
   *characterised in that*,
   at least one of the force transducers (1) is a piezo sensor.

4. Force evaluating method with which forces acting on force transducers are determined and evaluated in a time-resolved manner,
   wherein precisely three force transducers (1), each having a signal output, are arranged in the shape of a triangle in a force transducer plane and on one side of a rigid support plate (2), which can be walked upon, and bordering it, and are coupled to the support plate (2) in such a way that the forces of the force transducers (1) resulting from a compressive force on the force transducers (1), which acts on the support plate (2), can be determined in a time-resolved manner,
   wherein the support plate (2) on the side facing away from the force transducers (1) is pressure-loaded over a time period by a person walking on the support plate and/or standing on the support plate,

wherein the output signals of the force transducers (1) can each be scanned with a sampling rate of above 50 Hz and below 250 Hz,

wherein, for the time period, a time-resolved overall signal is formed from the sum of the output signals of the precisely three force transducers (1), resulting from the pressure-loading on the force transducers (1),

wherein the power spectrum of the overall signal is calculated and evaluated in terms of the frequencies it contains, by calculating the arithmetical and/or geometrical average of the contained frequencies, and wherein, over the time period, the current location of the dynamic focus of the person, which is projected onto the force transducer plane, and the surface covered by this location or its movement path in the force transducer plane over the time period are determined from the output signals of the force transducers (1) .

5. Force evaluating method according to the preceding claim,
   *characterised in that*,
   the time average of the overall signal over the time period is formed for determining the average pressure-loading of the support plate.

6. Force evaluating method according to one of the two preceding claims,
   **characterised** *in that*,
   the dynamic focus is composed of a static portion resulting from the mass of the person, and of a portion resulting from the force executed by the person on the support plate by means of muscle forces.

7. Force evaluating method according to one of the three preceding claims,
   *characterised in that*,
   the current location of the dynamic focus is calculated according to $\sum\limits_{i=1}^{N} \frac{m_i}{m_{ges.}} \vec{r}_i$ , wherein N is the number of force transducers and i indicates the i-ten force transducer, and wherein, at the point in time in consideration, $m_i$ the measurement of the i-ten force transducer, $m_{ges.}$ the sum of the measurements of the N force transducers and $r_i$ the position vector of the i-ten force transducer are in an orthogonal coordinate system.

8. Force evaluating method according to one of the four preceding claims,
   *characterised in that*,
   the ratio of the determined covered surface for a first person and the determined covered surface for a second person, who is not identical to the first person, is calculated.

9. Force evaluation method according to one of the five preceding claims,
   ***characterised in that***,
   the power spectrum of the overall signal is calculated by means of the Fourier transform or by means of the method of maximum entropy.

10. Force evaluating method according to one of the six preceding claims,
    ***characterised in that***,
    the calculated power spectrum is evaluated in terms of the frequencies which it contains by calculating maxima in the power spectrum.

11. Use of a force evaluating device or a force evaluating method according to one of the preceding claims for determining or monitoring the roadworthiness of people, for determining the influence of alcohol or drugs on the motor abilities of people or for determining performance characteristics for the physical fitness of people.

**Revendications**

1. Dispositif d'analyse des forces avec lequel des forces s'exerçant sur un transducteur de force peuvent être déterminées et analysées avec une résolution temporelle, comprenant précisément trois transducteurs de force (1) agencés sous forme d'un triangle dans un plan de transducteurs de force comprenant, respectivement, une sortie de signaux,
   une plaque de support (2) accessible, rigide, couplée aux transducteurs de force (1), les transducteurs de force (1) étant agencés sur un côté de la plaque de support (2) de manière adjacente à celle-ci, les forces résultant d'une force de pression s'exerçant sur la plaque de support (2) au niveau des transducteurs de force (1) pouvant être détectées par les transducteurs de force (1) avec une résolution temporelle, et les signaux de sortie des transducteurs de force (1) pouvant respectivement être échantillonnés à un taux d'échantillonnage supérieur à 50 Hz et inférieur à 250 Hz, et
   une unité d'analyse (4, 5, 6, 7) avec laquelle les transducteurs de force (1) sont raccordés du côté de la sortie de signaux et qui présente une unité de calcul de spectre des puissances (7) avec laquelle le spectre des puissances du signal global formé à partir de la somme des signaux de sortie des précisément trois transducteurs de force (1) peut être calculé,
   avec l'unité d'analyse (4, 5, 6, 7), à partir des signaux de sortie des transducteurs de force (1), la position momentanée, projetée dans le plan des transducteurs de force, du centre de gravité dynamique d'une personne exerçant une pression sur la plaque de support du côté opposé aux transducteurs de force et la surface recouverte depuis cette position ou son trajet de déplacement dans le plan des transducteurs de force pendant un intervalle de temps pouvant être déterminées, et
avec l'unité d'analyse (4, 5, 6, 7), le spectre de puissance calculé pouvant être analysé au niveau des fréquences qu'il contient en ce que la moyenne arithmétique et/ou géométrique des fréquences qu'il contient est(sont) calculée(s).

2. Dispositif d'analyse des forces selon la revendication précédente,
   **caractérisé par**
   une plaque de fond (3) agencée sur le côté opposé à la plaque de support (2) de manière adjacente aux transducteurs de force (1).

3. Dispositif d'analyse des forces selon l'une quelconque des revendications précédentes, **caractérisé en ce qu'**au moins un des transducteurs de force (1) est un capteur piézoélectrique.

4. Procédé d'analyse des forces avec lequel des forces s'exerçant sur des transducteurs de force peuvent être déterminées et analysées avec une résolution temporelle,
   précisément trois transducteurs de force (1) comprenant, respectivement, une sortie de signaux étant agencés sous forme d'un triangle dans un plan de transducteurs de force et sur un côté d'une plaque de support (2) accessible, rigide, de manière adjacente à celle-ci et sont couplés à la plaque de support (2) de telle sorte que les forces résultant d'une force de pression s'exerçant sur la plaque de support (2) au niveau des transducteurs de force (1) peuvent être détectées par les transducteurs de force (1) avec une résolution temporelle,
   la plaque de support (2) étant soumise à une pression sur le côté opposé aux transducteurs de force (1) au cours d'un intervalle de temps en ce qu'une personne monte sur la plaque de support et/ou se tient sur la plaque de support,
   les signaux de sortie des transducteurs de force (1) étant, respectivement, échantillonnés à un taux d'échantillonnage supérieur à 50 Hz et inférieur à 250 Hz,
   pour l'intervalle de temps, un signal global intégrant une résolution temporelle étant formé à partir de la somme des signaux de sortie des précisément trois transducteurs de force (1) résultant du fait de la pression exercée sur les transducteurs de force (1),
   le spectre de puissance du signal global étant calculé et analysé au niveau des fréquences qu'il contient en ce que la moyenne arithmétique et/ou géométrique des fréquences qu'il contient est (sont) calculée (s), et
   à partir des signaux de sortie des transducteurs de force (1), au cours de l'intervalle de temps, la position momentanée, projetée dans le plan des transducteurs de force, du centre de gravité dynamique de la personne et la surface recouverte depuis cette position ou son trajet de déplacement dans le plan des transducteurs de force pendant cet intervalle de temps étant déterminées.

5. Procédé d'analyse des forces selon la revendication précédente,
**caractérisé**
**en ce que** la moyenne temporelle du signal global au cours de l'intervalle de temps est formée pour la détermination de la pression moyenne exercée sur la plaque de support.

6. Procédé d'analyse des forces selon l'une des deux revendications précédentes,
**caractérisé**
**en ce que** le centre de gravité dynamique se compose d'une part statique résultant de la masse de la personne et d'une part résultant de la force exercée sur la plaque de support par la personne au moyen de forces musculaires.

7. Procédé d'analyse des forces selon l'une quelconque des trois revendications précédentes, **caractérisé**
**en ce que** la position momentanée du centre de gravité dynamique est calculée selon

$$\sum_{i=1}^{N} \frac{m_i}{m_{ges.}} \vec{r_i} ,$$ N représentant le nombre de transducteurs de force et i désignant le i-ième transducteur de force et, au moment considéré, $m_i$ représentant la valeur de mesure du i-ième transducteur de force, $m_{gcs}$, la somme des valeurs de mesure des N transducteurs de force et $\vec{r_i}$ le vecteur de position du i-ième transducteur de force dans un système de coordonnées orthogonal.

8. Procédé d'analyse des forces selon l'une quelconque des quatre revendications précédentes, **caractérisé**
**en ce que** le rapport entre la surface recouverte déterminée pour une première personne et la surface recouverte déterminée pour une deuxième personne non identique à la première personne est calculé.

9. Procédé d'analyse des forces selon l'une quelconque des cinq revendications précédentes, **caractérisé**
**en ce que** le spectre de puissance du signal global est calculé au moyen de la transformation de Fourier ou au moyen de la méthode de l'entropie maximale.

10. Procédé d'analyse des forces selon l'une quelconque des six revendications précédentes, **caractérisé**

**en ce que** le spectre de puissance calculé est analysé au niveau des fréquences qu'il contient en ce que des maximas sont calculés dans le spectre de puissance.

11. Utilisation d'un dispositif d'analyse des forces ou d'un procédé d'analyse des forces selon l'une quelconque des revendications précédentes pour la détermination ou la surveillance de l'aptitude à conduire de personnes, pour la détermination de l'influence de l'alcool ou de drogues sur les capacités motrices de personnes ou pour la détermination de valeurs caractéristiques pour la forme physique de personnes.

# Fig. 1A

# Fig. 1B

**Fig. 2**

EP 1 763 656 B1

**Fig. 3**

Fig. 4

Fig. 5

LEISTUNG [W]

14,5 Watt

NR. DES MEXIMUMS

EP 1 763 656 B1

Fig. 6

Fig. 7A

**Fig. 7B**

**Fig. 7C**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5620003 A
- FR 2690613 A
- US 4195643 A
- US 2001056249 A

**In der Beschreibung aufgeführte Nicht-Patentliteratur**

- **KARLSSON, J.** Musculoskelet. *Neuron. Inter,* April 2004, 12-21
- Numerical Recipes. **PASCAL.** The art of Scientific Computing. Cambridge University Press, 1989